# FASCICULE DE BREVET EUROPEEN

(11) **EP 3 122 576 B1**
(45) Date de publication et mention de la délivrance du brevet: **05.06.2019**
(21) Numéro de dépôt: 15714872.7
(22) Date de dépôt: 17.03.2015
(51) Int. Cl.: B60G 7/02, B60G 9/02

(54) **VÉHICULE AUTOMOBILE COMPORTANT DES MOYENS DE GUIDAGE DE FIXATION DE TRAIN ROULANT**
KRAFTFAHRZEUG MIT FÜHRUNGSVORRICHTUNGEN ZUR FAHRWERKBEFESTIGUNG
MOTOR VEHICLE COMPRISING RUNNING GEAR ATTACHMENT GUIDE MEANS

(30) Priorité: 27.03.2014 FR 1452634
(43) Date de publication de la demande: 01.02.2017
(73) Titulaire: Renault S.A.S., 92100 Boulogne-Billancourt (FR)
(72) Inventeur: WILLEMENOT, Johann, F-92350 Le Plessis Robinson (FR); RIOULT, Olivier, F-78960 Voisins Le Bretonneux (FR)
(86) Numéro de dépôt international: PCT/FR2015/050650
(87) Numéro de publication internationale: WO 2015/145023

(56) Documents cités:
- EP-A1- 0 560 242
- DE-A1- 19 634 215
- DE-A1-102008 029 136
- US-A- 6 089 675

## Description

L'invention concerne un véhicule automobile.

L'invention concerne plus particulièrement un véhicule automobile, comportant un élément de structure de caisse et un train roulant, notamment un train arrière, qui comporte au moins un bras comportant une extrémité supérieure de fixation qui est reçue dans une chape en tôle portée par une face inférieure d'un plancher de l'élément de structure de caisse, ladite extrémité de fixation comportant au moins un manchon tubulaire transversal qui est reçu avec un jeu réduit entre deux flancs parallèles de ladite chape, et une vis de fixation étant apte à traverser deux perçages coaxiaux des deux flancs et ledit manchon tubulaire transversal pour permettre la fixation de ladite extrémité de fixation dans la chape.

On connait de nombreux exemples de véhicule automobile comportant un train arrière fixé de cette manière au plancher de l'élément de structure de caisse. Le document EP0560242 montre un tel train arrière.

Une telle conception pose de nombreux problèmes de montage car il est nécessaire d'aligner des perçages des flancs et le manchon alors même que le train arrière et l'élément de structure de caisse sont des éléments volumineux et lourds dont les déplacements, même assurés par un système de manutention, sont peu précis.

Il est donc très difficile, dans le cadre d'un atelier d'assemblage, d'assurer une bonne coaxialité des perçages des flancs avec le manchon préalablement à l'introduction de la vis de fixation.

L'invention remédie à cet inconvénient en proposant un véhicule automobile comportant des moyens de guidage de l'extrémité de fixation du bras du train arrière apte à permettre une mise en position du manchon coaxialement avec les perçages des flancs.

Dans ce but, l'invention propose un véhicule automobile du type décrit précédemment, caractérisé en ce que la chape comporte des moyens de guidage de l'extrémité de fixation vers une position d'alignement des perçages des flancs et du manchon.

Selon d'autres caractéristiques de l'invention :
- chaque flanc comporte un moyen de guidage d'une extrémité axiale correspondante du manchon tubulaire vers la position d'alignement des perçages des flancs et du manchon,
- chaque moyen de guidage fait saillie perpendiculairement à partir d'une face dudit flanc tournée vers le manchon et il est disposé dans un plan transversal selon un profil d'arche dont la concavité est apte déterminer une position d'immobilisation de l'extrémité du manchon tubulaire en butée contre la nervure dans laquelle le manchon tubulaire est coaxial avec le perçage du flanc,
- chaque moyen de guidage comporte une série d'ergots disposés selon le profil d'arche.
- chaque moyen de guidage comporte une nervure disposée selon le profil d'arche.
- le profil d'arche de la nervure est semi-circulaire et d'un diamètre interne correspondant au diamètre externe du manchon,
- le profil d'arche de la nervure est trapézoïdal et complémentaire du diamètre externe du manchon.
- la concavité de la nervure est tournée à l'opposé du plancher, pour permettre une mise en position d'immobilisation de l'extrémité du manchon tubulaire par remontée dudit manchon.
- la concavité de la nervure est tournée vers le plancher, pour permettre une mise en position d'immobilisation de l'extrémité du manchon tubulaire par descente dudit manchon, et son maintien dans ladite position d'immobilisation par gravité,
- le train arrière est de type semi-rigide et il comporte
   - un bras central tubulaire comportant un tronçon transversal dont une partie centrale comporte l'extrémité de fixation, et deux bras tirés qui s'étendent de part et d'autre du tronçon transversal,
   - deux bras transversaux, qui comportent des premières extrémités articulées sur un berceau fixé sous la face inférieure du plancher de l'élément de structure de caisse, et des secondes extrémités articulées aux extrémités des bras tirés,
le train arrière comportant un élément de fixation qui comporte une bague supérieure qui comporte un alésage recevant un élément élastomère cylindrique dans lequel est reçu coaxialement le manchon tubulaire et la bague inférieure, qui enserre le bras central, et qui comporte un pied et un chapeau semi-cylindriques qui sont fixés l'un à l'autre.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée d'une portion d'élément de structure de caisse et d'un train arrière d'un véhicule selon un état antérieur de la technique ;
- la figure 2 est une vue en perspective assemblée d'une portion d'élément de structure de caisse et du train arrière du véhicule de la figure 1 ;
- la figure 3 une vue de détail en perspective de la fixation d'une extrémité supérieure de fixation du train arrière selon un premier mode de réalisation de l'invention ;
- les figures 4A à 4C sont des vues en perspective illustrant les étapes de fixation de la fixation d'une extrémité supérieure de fixation du train arrière selon un deuxième mode de réalisation de l'invention ;
- les figures 5A et 5B sont des vues en perspective illustrant les étapes de fixation de la fixation d'une extrémité supérieure de fixation du train arrière selon un troisième mode de réalisation de l'invention.

Dans la description qui va suivre, des chiffres de référence identiques désignent des pièces identiques ou ayant des fonctions similaires.

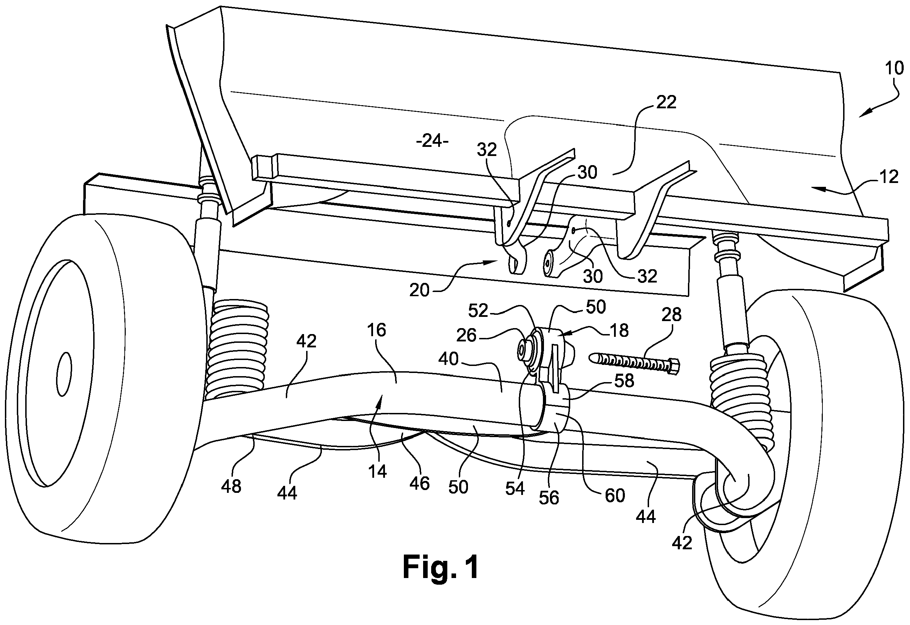

On a représenté à la figure 1 une partie arrière 10 d'un véhicule automobile réalisé conformément à l'état de la technique.

De manière connue, le véhicule comporte un élément 12 de structure de caisse et un train roulant 14, notamment un train arrière, qui comporte au moins un bras 16 comportant une extrémité 18 supérieure de fixation qui est reçue dans une chape 20 en tôle portée par une face inférieure 22 d'un plancher 24 de l'élément 12 de structure de caisse,

De manière connue, l'extrémité 18 de fixation comporte au moins un manchon 26 tubulaire transversal qui est reçu avec un jeu réduit entre deux flancs parallèles 30 de ladite chape 20. Une vis 28 de fixation est apte à traverser deux perçages coaxiaux 32 des deux flancs 30 et ledit manchon 26 tubulaire transversal pour permettre la fixation de ladite extrémité 18 de fixation dans la chape 20.

Une telle conception pose de nombreux problèmes de montage car il est nécessaire d'aligner les perçages 32 des flancs 30 et le manchon 26 tubulaire alors même que le train arrière 14 et l'élément 12 de structure de caisse sont des éléments volumineux et lourds dont les déplacements, même assurés par un système de manutention, sont peu précis.

Il est donc très difficile, dans le cadre d'un atelier d'assemblage, d'assurer un guidage manuel efficace du train arrière 14 vers une position de coaxialité des perçages 32 des flancs 30 avec le manchon 26 préalablement à l'introduction de la vis 28 de fixation. Il est courant qu'une telle opération nécessite plusieurs tentatives d'alignement avant de parvenir à l'alignement des perçages 32 avec le manchon 26. Il en résulte un ralentissement de la chaîne d'assemblage d'un tel véhicule.

L'invention remédie à cet inconvénient en proposant un véhicule automobile comportant des moyens 34 de guidage de l'extrémité 18 de fixation du bras 16 du train arrière 14 apte à permettre une mise en position du manchon 26 coaxialement avec les perçages 32 des flancs 30.

Dans ce but, l'invention propose un véhicule automobile du type décrit précédemment, caractérisé en ce que la chape 20 comporte des moyens 34 de guidage de l'extrémité 18 de fixation vers une position d'alignement des perçages 32 des flancs 30 et du manchon 26.

Tout moyen de guidage connu de l'état de la technique pourrait convenir à la bonne mise en oeuvre de l'invention. En particulier, tout moyen de guidage de l'extrémité 18 supérieure de fixation, dont la conformation sera par ailleurs décrite plus en détail dans la suite de la présente description, visant à conduire ladite extrémité 18 supérieure de fixation du bras 16 vers une position univoque dans laquelle les perçages 32 des flancs 30 et le manchon 26 sont alignés coaxialement, pourrait convenir à la bonne mise en oeuvre de l'invention.

Toutefois, dans le mode de réalisation préféré de l'invention, pour assurer un guidage le plus précis possible chaque flanc 32 comporte un moyen 34 de guidage d'une extrémité axiale correspondante du manchon 26 tubulaire vers la position d'alignement des perçages 32 des flancs 30 et du manchon 26.

En effet, plus le moyen de guidage 34 est proche du manchon 26, plus il est à même de guider le manchon 26 dans sa position d'alignement avec les perçages 32 des flancs 30 avec une tolérance de coaxialité réduite.

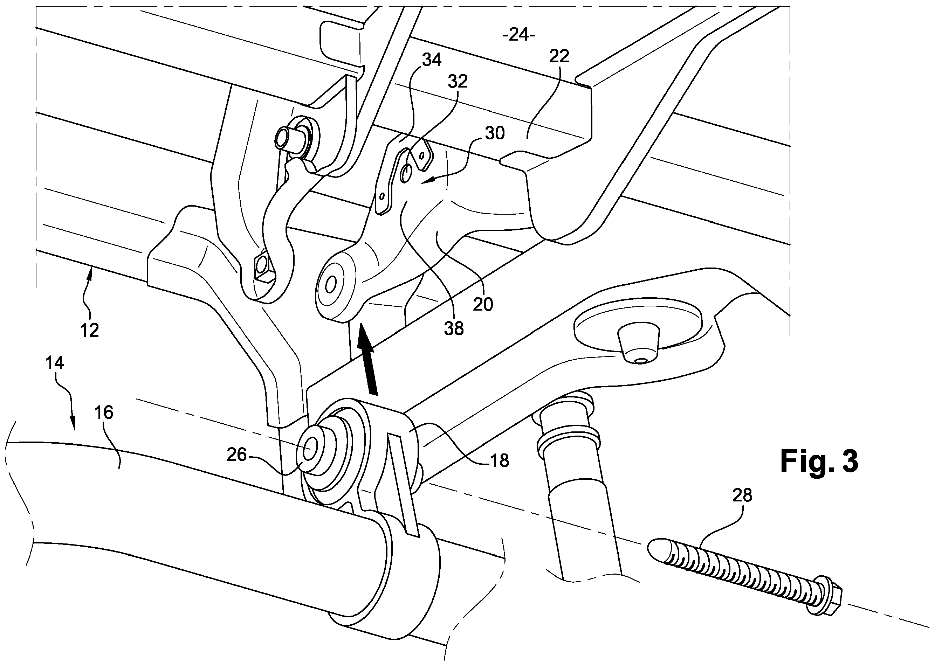

Comme l'illustrent les figures 3 à 5B, chaque moyen de guidage 34 fait saillie perpendiculairement à partir d'une face 38 du flanc 30 qui est tournée vers le manchon 26. Chaque moyen de guidage 34 s'étend dans un plan transversal parallèle à la face 38 selon un profil d'arche dont la concavité est apte déterminer une position d'immobilisation de l'extrémité du manchon tubulaire 26 en butée contre le moyen de guidage 34 dans laquelle le manchon tubulaire 26 est coaxial avec le perçage 32 du flanc 30.

En effet, le moyen de guidage 34 étant agencé selon un profil d'arche concave, il est donc à même d'immobiliser le manchon tubulaire 26 lorsqu'il est reçu dans la concavité dudit moyen de guidage 34 dans un sens suivant la direction verticale et dans les deux sens horizontalement.

Le moyen de guidage peut prendre plusieurs formes.

Selon des premier, deuxième et troisième modes de réalisation qui ont été représentés aux figures 3 à 5B, chaque moyen de guidage 34 est constitué d'une nervure 34 disposée selon le profil d'arche.

Selon un premier mode de réalisation qui a été représenté à la figure 3, le profil d'arche de la nervure 34 est trapézoïdal et il est complémentaire du diamètre externe du manchon 26. Lorsque le train arrière 14 est remonté vers l'élément 12 de structure de caisse comme l'illustre la flèche de la figure 3, les extrémités axiales opposées du manchon 26 pénètrent dans la nervure 34 trapézoïdale. Le manchon 26 est alors bloqué contre la petite base de la nervure trapézoïdale et contre les deux côtés non parallèles de la nervure 34 trapézoïdale.

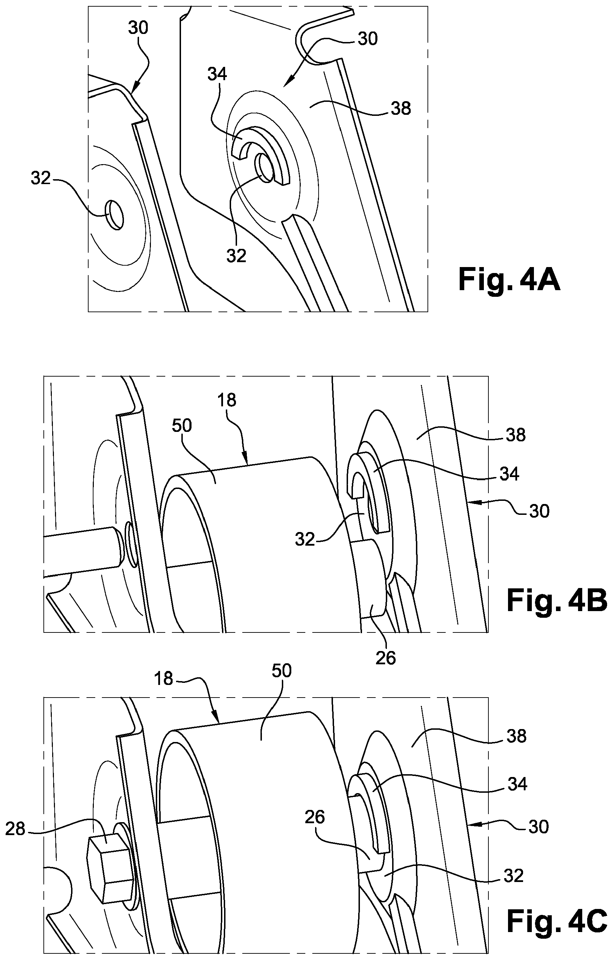

Selon les deuxième et troisième modes de réalisation qui ont été représenté aux figures 4A à 5B, le profil d'arche de la nervure 34 est semi-circulaire et d'un diamètre interne correspondant au diamètre externe du manchon 26.

Dans le deuxième mode de réalisation qui a été représenté aux figures 4A et 4B la concavité de la nervure 34 est tournée à l'opposé du plancher 22, pour permettre une mise en position d'immobilisation de l'extrémité du manchon tubulaire 26 par remontée dudit manchon 26.

Dans cette configuration, le manchon tubulaire 26, lors de sa remontée vient épouser la nervure 34 et se retrouve alors circonvenu par ladite nervure 34 trapézoïdale, ce qui l'immobilise suivant la direction verticale et dans les deux sens transversalement, par les flancs 38, comme représenté à la figure 4C.

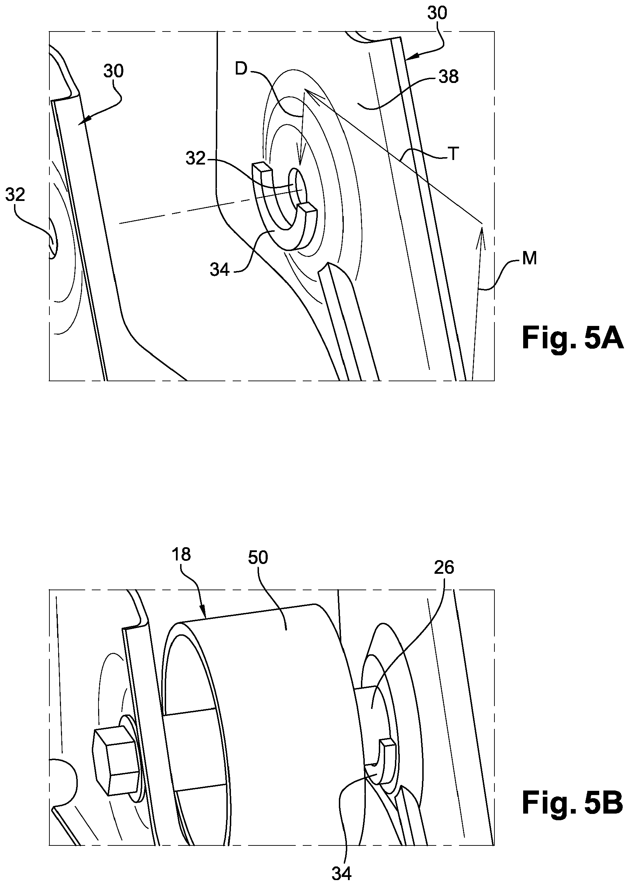

Dans le troisième mode de réalisation qui a été représenté aux figures 5A et 5B, la concavité de la nervure 34 est tournée vers le plancher, pour permettre une mise en position d'immobilisation de l'extrémité du manchon tubulaire 26 par descente dudit manchon 26, et pour s'opposer ensuite à la descente du manchon 36, ce qui permet son maintien dans ladite position d'immobilisation par gravité.

Dans cette configuration, il sera compris que les flancs 30 étant surmontés par le plancher 22 du véhicule, l'extrémité 18 de fixation du train doit être préalablement remontée verticalement suivant un mouvement "M" devant les flancs 30 au-dessus du niveau de la nervure 34, puis déplacée transversalement au droit de la nervure 34 suivant un mouvement "T", puis descendue verticalement suivant un mouvement "D" de manière que l'extrémité du manchon tubulaire 26 repose et se trouve accrochée par la nervure 34. Le détail de ce mouvement a été représenté par les flèches "M, T, D" de la figure 5A.

Selon un quatrième mode de réalisation de l'invention (non représenté, chaque moyen de guidage comporte une série d'ergots disposés selon le profil d'arche.

Les ergots peuvent être disposés de manière régulière et sont de préférence distants les uns des autres d'une distance inférieure au diamètre du manchon 26, afin d'éviter que le manchon ne s'échappe entre deux ergots.

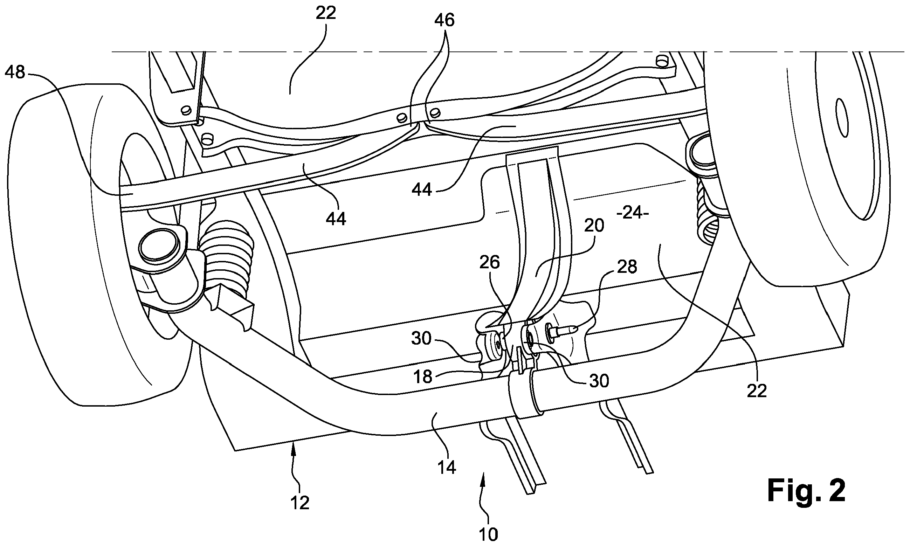

L'invention trouve particulièrement à s'appliquer à un train arrière 14 de type semi-rigide du type de celui qui a été représenté aux figures 1 et 2. Le train 14 comporte un bras central 16 tubulaire comportant un tronçon transversal 40 dont une partie centrale comporte l'extrémité 18 de fixation, et deux bras tirés 42 qui s'étendent de part et d'autre du tronçon transversal 40.

Le train 14 comporte par ailleurs avantageusement deux bras transversaux 44, qui comportent des premières extrémités articulées 46 sur un berceau 50 fixé sous la face inférieure du plancher 22 de l'élément 12 de structure de caisse, et des secondes extrémités 48 articulées aux extrémités des bras tirés 48.

Dans cette configuration, comme l'illustre la figure 1, l'élément 18 de fixation comporte une bague supérieure 50 qui comporte un alésage 52 recevant un élément 54 élastomère cylindrique dans lequel est emprisonné le manchon tubulaire 26, et une bague inférieure 56 qui enserre le bras central et qui comporte un pied 58 et un chapeau 60 semi-cylindriques qui sont fixés l'un à l'autre de manière démontable pour permettre la fixation de ladite bague 56 sur le bras central 16.

L'invention permet donc de faciliter la fixation d'un train roulant 16 de manière simple et efficace.

## Revendications

1. Véhicule automobile, comportant un élément (12) de structure de caisse et un train roulant (14), notamment un train arrière, qui comporte au moins un bras (16) comportant une extrémité (18) supérieure de fixation qui est reçue dans une chape (20) en tôle portée par une face inférieure (22) d'un plancher (24) de l'élément (12) de structure de caisse,
ladite extrémité (18) de fixation comportant au moins un manchon (26) tubulaire transversal qui est reçu avec un jeu réduit entre deux flancs (30) parallèles de ladite chape (20), et
une vis (28) de fixation étant apte à traverser deux perçages coaxiaux (32) des deux flancs (30) et ledit manchon tubulaire transversal (26à pour permettre la fixation de ladite extrémité (18) de fixation dans la chape (20),
**caractérisé en ce que** la chape (20) comporte des moyens de guidage de l'extrémité (18) de fixation vers une position d'alignement des perçages (32) des flancs (30) et du manchon (26).

2. Véhicule automobile selon la revendication précédente, **caractérisé en ce que** chaque flanc (30) comporte un moyen de guidage (34) d'une extrémité axiale correspondante du manchon tubulaire (26) vers la position d'alignement des perçages (32) des flancs (30) et du manchon (26).

3. Véhicule automobile selon la revendication précédente, **caractérisé en ce que** chaque moyen (34) de guidage s'étend perpendiculairement à partir d'une face (38) dudit flanc (30) tournée vers le manchon (26) et **en ce qu'**il est disposé dans un plan transversal selon un profil d'arche dont la concavité est apte déterminer une position d'immobilisation de l'extrémité du manchon tubulaire (26) en butée contre le moyen (34) de guidage dans laquelle le manchon tubulaire (26) est coaxial avec le perçage (32) du flanc (30).

4. Véhicule selon la revendication précédente, **caractérisé en ce que** chaque moyen de guidage (34) comporte une série d'ergots disposés selon le profil d'arche.

5. Véhicule selon la revendication 3, **caractérisé en ce que** chaque moyen de guidage (34) comporte une nervure disposée selon le profil d'arche.

6. Véhicule automobile selon la revendication précédente, **caractérisé en ce que** le profil d'arche de la nervure (34) est semi-circulaire et d'un diamètre interne correspondant au diamètre externe du manchon (26).

7. Véhicule automobile selon la revendication 5, **caractérisé en ce que** le profil d'arche de la nervure (34) est trapézoïdal et complémentaire du diamètre externe du manchon (26).

8. Véhicule automobile selon l'une des revendications 5 à 7, **caractérisé en ce que** la concavité de la nervure est tournée à l'opposé du plancher (24), pour permettre une mise en position d'immobilisation de l'extrémité du manchon tubulaire (26) par remontée dudit manchon (26).

9. Véhicule automobile selon l'une des revendications 5 à 7, **caractérisé en ce que** la concavité de la nervure (34) est tournée vers le plancher (26), pour permettre une mise en position d'immobilisation de l'extrémité du manchon tubulaire (26) par descente dudit manchon (26), et son maintien dans ladite position d'immobilisation par gravité.

10. Véhicule automobile selon l'une quelconque des revendications précédentes, **caractérisé en ce que** le train arrière (14) est de type semi-rigide et **en ce qu'**il comporte
- un bras central tubulaire (16) comportant un tronçon transversal (40) dont une partie centrale comporte l'extrémité (18) de fixation, et deux bras tirés (42) qui s'étendent de part et d'autre du tronçon transversal (40),
- deux bras transversaux (44), qui comportent des premières extrémités (46) articulées sur un berceau (50) fixé sous la face inférieure (22) du plancher (24) de l'élément (12) de structure de caisse, et des secondes extrémités (46) articulées aux extrémités des bras tirés (42)
le train arrière comportant un élément (18) de fixation qui comporte une bague supérieure (50) qui comporte un alésage (52) recevant un élément élastomère (54) cylindrique dans lequel est reçu coaxialement le manchon tubulaire (26) et une bague inférieure (56) qui enserre le bras central (16) et qui comporte un pied (58) et un chapeau semi-cylindriques (60) qui sont fixés l'un à l'autre.

## Patentansprüche

1. Kraftfahrzeug, welches ein Karosseriestrukturelement (12) und ein Fahrwerk (14) aufweist, insbesondere eine Hinterachse, welche wenigstens einen Arm (16) aufweist, der ein oberes Befestigungsende (18) aufweist, welches in einem Gabelstück (20) aus Blech aufgenommen ist, das von einer Unterseite (22) eines Bodens (24) des Karosseriestrukturelements (12) getragen wird, wobei das Befestigungsende (18) wenigstens eine quer angeordnete rohrförmige Hülse (26) aufweist, welche mit einem geringen Spiel zwischen zwei parallelen Flanschen (30) des Gabelstücks (20) aufgenommen ist, und
wobei eine Befestigungsschraube (28) geeignet ist, zwei koaxiale Bohrungen (32) der zwei Flansche (30) und die quer angeordnete rohrförmige Hülse (26) zu durchqueren, um die Befestigung des Befestigungsendes (18) in dem Gabelstück (20) zu ermöglichen,
**dadurch gekennzeichnet, dass** das Gabelstück (20) Mittel zur Führung des Befestigungsendes (18) in Richtung einer Position der Ausrichtung der Bohrungen (32) der Flansche (30) und der Hülse (26) aufweist.

2. Kraftfahrzeug nach dem vorhergehenden Anspruch, **dadurch gekennzeichnet, dass** jeder Flansch (30) ein Mittel zur Führung (34) eines entsprechenden axialen Endes der rohrförmigen Hülse (26) in Richtung der Position der Ausrichtung der Bohrungen (32) der Flansche (30) und der Hülse (26) aufweist.

3. Kraftfahrzeug nach dem vorhergehenden Anspruch, **dadurch gekennzeichnet, dass** jedes Führungsmittel (34) sich von einer der Hülse (26) zugewandten Seite (38) des Flansches (30) aus senkrecht erstreckt, und dadurch, dass es in einer quer verlaufenden Ebene entlang eines Bogenprofils angeordnet ist, dessen Konkavität geeignet ist, eine an dem Führungsmittel (34) anliegende Position der Arretierung des Endes der rohrförmigen Hülse (26) zu bestimmen, in welcher die rohrförmige Hülse (26) koaxial mit der Bohrung (32) des Flansches (30) ist.

4. Fahrzeug nach dem vorhergehenden Anspruch, **dadurch gekennzeichnet, dass** jedes Führungsmittel (34) eine Reihe von Nasen aufweist, die entlang des Bogenprofils angeordnet sind.

5. Fahrzeug nach Anspruch 3, **dadurch gekennzeichnet, dass** jedes Führungsmittel (34) eine Rippe aufweist, die entlang des Bogenprofils angeordnet ist.

6. Kraftfahrzeug nach dem vorhergehenden Anspruch, **dadurch gekennzeichnet, dass** das Bogenprofil der Rippe (34) halbkreisförmig ist und einen Innendurchmesser aufweist, der dem Außendurchmesser der Hülse (26) entspricht.

7. Kraftfahrzeug nach Anspruch 5, **dadurch gekennzeichnet, dass** das Bogenprofil der Rippe (34) trapezförmig und komplementär zum Außendurchmesser der Hülse (26) ist.

8. Kraftfahrzeug nach einem der Ansprüche 5 bis 7, **dadurch gekennzeichnet, dass** die Konkavität der Rippe von dem Boden (24) abgewandt ist, um eine Anbringung des Endes der rohrförmigen Hülse (26) in der Arretierungsposition durch Bewegung der Hülse (26) nach oben zu ermöglichen.

9. Kraftfahrzeug nach einem der Ansprüche 5 bis 7, **dadurch gekennzeichnet, dass** die Konkavität der Rippe (34) dem Boden (26) zugewandt ist, um eine Anbringung des Endes der rohrförmigen Hülse (26) in der Arretierungsposition durch Bewegung der Hülse (26) nach unten und ihr Halten in dieser Arretierungsposition durch Schwerkraft zu ermöglichen.

10. Kraftfahrzeug nach einem der vorhergehenden Ansprüche, **dadurch gekennzeichnet, dass** die Hinterachse (14) vom halbstarren Typ ist, und dadurch, dass sie aufweist:
- einen rohrförmigen zentralen Arm (16), der einen Querabschnitt (40), von dem ein zentraler Teil das Befestigungsende (18) aufweist, und zwei gezogene Arme (42), welche sich beiderseits des Querabschnitts (40) erstrecken, aufweist,
- zwei Querlenker (44), welche ersten Enden (46), die an einem Gestell (50) angelenkt sind, das unter der Unterseite (22) des Bodens (24) des Karosseriestrukturelements (12) befestigt ist, und zweite Enden (46), die an den Enden der gezogenen Arme (42) angelenkt sind, aufweisen,
wobei die Hinterachse ein Befestigungselement (18) aufweist, welches einen oberen Ring (50) aufweist, welcher eine Bohrung (52) aufweist, die ein zylindrisches elastomeres Element (54) aufnimmt, in welchem die rohrförmige Hülse (26) koaxial aufgenommen ist, und einen unteren Ring (56), welcher den zentralen Arm (16) umschließt und welcher einen Fuß (58) und eine Abdeckung (60), die halbzylinderförmig sind, aufweist, welche aneinander befestigt sind.

## Claims

1. Motor vehicle comprising a structural bodywork element (12) and a running gear (14), particularly a rear axle, that comprises at least one arm (16) comprising an upper attachment extremity (18) that is received in a sheet metal clevis (20) supported on a lower face (22) of a floor (24) of the structural bodywork element (12),
said attachment extremity (18) comprising at least one transverse tubular sleeve (26) that fits with limited clearance between two parallel flanks (30) of said clevis (20), and
an attachment screw (28) designed to pass through two coaxial bores (32) in both flanks (30) and said transverse tubular sleeve (26) so as to enable attachment of said attachment extremity (18) into the clevis (20),
**characterized in that** the clevis (20) comprises means for guiding the attachment extremity (18) into a position in which the bores (32) in the flanks (30) and in the sleeve (26) are aligned.

2. Motor vehicle according to the preceding claim, **characterized in that** each flank (30) has means (34) for guiding a corresponding axial end of the tubular sleeve (26) towards the position in which the bores (32) in the flanks (30) and in the sleeve (26) are aligned.

3. Motor vehicle according to the preceding claim, **characterized in that** each guide means (34) extends perpendicular from one face (38) of said flank (30) oriented towards the sleeve (26), and **in that** same is arranged in a transverse plane and has an arch shape in which the concavity is designed to determine an immobilized position for the end of the tubular sleeve (26) butting against the guide means (34), the tubular sleeve (26) being coaxial to the bore (32) in the flank (30).

4. Vehicle according to the preceding claim, **characterized in that** each guide means (34) includes a series of lugs arranged around the arch shape.

5. Vehicle according to Claim 3, **characterized in that** each guide means (34) includes a rib arranged around the arch shape.

6. Motor vehicle according to the preceding claim, **characterized in that** the arch shape of the rib (34) is semi-circular and the internal diameter of same corresponds to the external diameter of the sleeve (26).

7. Motor vehicle according to Claim 5, **characterized in that** the arch shape of the rib (34) is trapezoidal and matches the external diameter of the sleeve (26).

8. Motor vehicle according to one of Claims 5 to 7, **characterized in that** the concavity of the rib is oriented away from the floor (24) to enable the end of the tubular sleeve (26) to be moved to the immobilized position by raising said sleeve (26).

9. Motor vehicle according to one of Claims 5 to 7, **characterized in that** the concavity of the rib (34) is oriented towards the floor (26) to enable the end of the tubular sleeve (26) to be moved to the immobilized position by lowering said sleeve (26) and to be held in said immobilized position by gravity.

10. Motor vehicle according to any one of the preceding claims, **characterized in that** the rear axle (14) is semi-rigid and comprises:
- a central tubular arm (16) comprising a transverse section (40), a central portion of which has the attachment extremity (18), and two trailing arms (42) extending on either side of the transverse section (40),
- two cross arms (44), which have first ends (46) articulated with a cradle (50) attached beneath the lower face (22) of the floor (24) of the structural bodywork element (12), and second ends (46) articulated with the ends of the trailing arms (42)
the rear axle having an attachment element (18) that includes an upper ring (50) that includes a bore (52) designed to receive a cylindrical elastomer element (54) in turn designed to coaxially receive the tubular sleeve (26) and a lower ring (56) that holds the central arm (16) and that includes a semi-cylindrical foot (58) and a semi-cylindrical cover (60) that are attached to one another.
